# EUROPEAN PATENT APPLICATION

(11) **EP 4 220 182 A1**
(43) Date of publication of application: **02.08.2023**
(21) Application number: 21905850.0
(22) Date of filing: 18.12.2021
(51) Int. Cl.: G01N 35/10, G01N 30/06, G01N 15/02

(54) **AUTOMATIC SAMPLE FEEDING SYSTEM**

(30) Priority: 19.12.2020 CN 202011508993
(71) Applicant: Peking University, Beijing 100871 (CN)
(72) Inventor: YE, Xinshan, Beijing 100871 (CN); YAO, Wenlong, Beijing 100871 (CN); XIONG, Decai, Beijing 100871 (CN)
(74) Representative: FRKelly
(86) International application number: PCT/CN2021/139400
(87) International publication number: WO 2022/127928

(57) **Abstract**

An automatic sample injection system is disclosed. The system includes: an inert gas conveying module (1), a sampling channel switching module (2), a quantification module (3), a disposal module (4), a liquid storage module (5), and a host computer. The host computer controls the sampling channel switching module (2) and the quantification module (3), so as to achieve accurate control of a sample injection amount. In addition, all reaction liquids can be independently conveyed separately by the sampling channel switching module (2) and the inert gas conveying module (1), such that stability and accuracy of sample injection are further improved, and accuracy of experimental reactions is ensured.

## Description

The present application claims the priority to Chinese Patent Application No. 202011508993.5, filed with the China National Intellectual Property Administration (CNIPA) on December 19, 2020 and entitled "AUTOMATIC SAMPLE INJECTION SYSTEM", the disclosure of which is incorporated by reference herein in its entirety as part of the present application.

### TECHNICAL FIELD

The present disclosure relates to the technical field of experiments, and particularly relates to an automatic sample injection system.

### BACKGROUND

At present, samples are accurately injected in two common ways. The first way is pipe transfer, which involves a polypeptide solid-phase synthesizer, an oligosaccharide solid-phase synthesizer and an automatic solid-phase extractor on the market. Advantageously, this way is airtight in system, safe, free of external interference and superior in systematization. Disadvantageously, this way requires a long research and development cycle as well as high design and development cost of a single finished product. Two designing methods are applicable to this way. The first method is to purchase and assemble adjustable and changeable units. Through this method, system redesign, a long cycle, a wide range of talents will still be required, and a number of factors influence operation results after assembly, despite convenient integration of programs (a syringe pump unit, a multi-channel switching valve, a light source, low-temperature circulation, magnetic stirring, online monitoring, etc.). The second method is to upgrade similar commercial products, that is, to appropriately transform mature and automatic products. Through this method, integration of programs will be labor-consuming since the mature products are equipped with their own patented mature software control systems, and redesigning an integrated board will possibly be required without source codes, despite a short cycle and normal work with few workers. The second way to inject samples is automatic pipetting, which involves mature automatic pipetting workstations (at a price of 100,000-400,000 CNY) on the market. The workstations can be directly purchased and slightly modified for use. Advantageously, this way is simple, rapid and capable of replacing manual operation with mechanical operation. Disadvantageously, this way requires mechanical arms for all operations, resulting in a higher failure rate and a demand for larger space, and faces inconvenient integration of programs due to mature products.

In view of this, it is urgent to provide an automatic sample injection system that can ensure stability and accuracy of sample injection.

### SUMMARY

An objective of the present disclosure is to provide an automatic sample injection system, so as to ensure stability and accuracy of automatic sample injection in an experimental process.

To achieve the above objective, the present disclosure provides the following technical solution:

The automatic sample injection system includes: an inert gas conveying module, a sampling channel switching module, a quantification module, a disposal module, a liquid storage module, and a host computer.

The liquid storage module and the sampling channel switching module are both connected to the inert gas conveying module through pipes. The quantification module is connected to the sampling channel switching module and the disposal module separately through pipes. The liquid storage module is connected to the sampling channel switching module through a pipe.

The inert gas conveying module, the sampling channel switching module and the quantification module are all electrically connected to the host computer.

The inert gas conveying module is configured to convey inert gas stored in the inert gas conveying module to the liquid storage module and the sampling channel switching module separately through pipes. The sampling channel switching module is configured to extract a solution to undergo reaction stored in the liquid storage module and to switch channels for extracting the solution to undergo reaction. The quantification module is configured to determine the amount of the solution to undergo reaction injected into the disposal module.

The host computer is configured to control the inert gas conveying module and the quantification module to be switched on or switched off and to control the sampling channel switching module to switch channels.

In some embodiments, the inert gas conveying module includes: an inert gas storage container, a pressure regulating filter, and a first solenoid valve unit.

The inert gas storage container is connected to the liquid storage module and the sampling channel switching module separately through pipes. The pressure regulating filter and the first solenoid valve unit are arranged on a connecting pipe between the inert gas storage container and the liquid storage module, or on a connecting pipe between the inert gas storage container and the sampling channel switching module.

In some embodiments, the liquid storage module includes N liquid storage bottles.

Each liquid storage bottle is connected to the inert gas conveying module through a pipe. A bottle bottom of the liquid storage bottle is conical or arc-shaped.

In some embodiments, the liquid storage bottle includes: a first passage opening, a second passage opening, a third passage opening, and a bottle cap.

The first passage opening is configured to be connected to the sampling channel switching module through a pipe. The second passage opening is configured to be connected to the inert gas conveying module through a pipe. The third passage opening is configured to discharge gas or liquid from the liquid storage bottle.

The bottle cap is connected to a bottle mouth of the liquid storage bottle in a threaded manner.

In some embodiments, the sampling channel switching module includes: a first multi-channel switching valve and a second multi-channel switching valve.

The first multi-channel switching valve is connected to M liquid storage bottles through pipes. The second multi-channel switching valve is connected to N-M liquid storage bottles through pipes.

In some embodiments, the quantification module includes: a syringe pump unit, a pressure sensor, a flowmeter, and a second solenoid valve unit.

An inlet of the syringe pump unit is connected to the sampling channel switching module through a pipe. An outlet of the syringe pump unit is connected to the flowmeter through a pipe. The flowmeter is connected to the disposal module through a pipe. The second solenoid valve unit is arranged on a connecting pipe between the flowmeter and the disposal module. The pressure sensor is arranged on a connecting pipe between the syringe pump unit and the flowmeter. The second solenoid valve unit, the pressure sensor and the flowmeter are all electrically connected to the host computer.

In some embodiments, the disposal module includes: a novel reactor, a solution pipe, and a waste liquid bottle.

A sample injection port of the novel reactor and a liquid inlet of the waste liquid bottle are both connected to the second solenoid valve unit through pipes. The solution pipe is connected to an exhaust port of the novel reactor through a pipe.

The second solenoid valve unit is configured to close a connecting pipe between the flowmeter and the novel reactor and open a connecting pipe between the flowmeter and the waste liquid bottle when a solution in the novel reactor reaches a given amount.

In some embodiments, the novel reactor includes: a bottle mouth, a bottle body, and a sampling port.

A given angle is formed between the sample injection port and the bottle body. The exhaust port and the sample injection port are symmetrically arranged with respect to a center line of the bottle mouth.

The bottle body includes a reaction inner container, a temperature circulating layer and a vacuum layer from inside to outside in sequence. A bottom of the reaction inner container is of an arc-shaped structure.

The sampling port is in communication with the reaction inner container.

In some embodiments, the syringe pump unit includes: a first syringe pump and a second syringe pump.

The first syringe pump is connected to one channel of the first multi-channel switching valve through a pipe. The second syringe pump is connected to one channel of the second multi-channel switching valve through a pipe. A range of the first syringe pump is smaller than that of the second syringe pump.

According to specific embodiments provided by the present disclosure, the present disclosure discloses the following technical effects:

The present disclosure provides the automatic sample injection system, which includes: the inert gas conveying module, the sampling channel switching module, the quantification module, the disposal module, the liquid storage module, and the host computer. The host computer controls the sampling channel switching module and the quantification module, so as to achieve accurate control of a sample injection amount. In addition, all reaction liquids may be independently conveyed by the sampling channel switching module and the inert gas conveying module separately, such that stability of sample injection is further improved, and accuracy of experimental reactions is ensured.

### BRIEF DESCRIPTION OF THE DRAWINGS

To describe technical solutions in embodiments of the present disclosure or in the prior art more clearly, the accompanying drawings required for the embodiments are briefly described below. Apparently, the accompanying drawings in the following description show merely some embodiments of the present disclosure, and those of ordinary skill in the art can still derive other accompanying drawings from these accompanying drawings without creative efforts.
FIG. 1 is a schematic structural diagram of an automatic sample injection system according to the present disclosure;
FIG. 2 is a schematic structural diagram of a liquid storage bottle according to the present disclosure;
FIG. 3 is a schematic structural diagram of a novel reactor according to the present disclosure; and
FIG. 4 is a schematic structural diagram showing that an automatic sample injection system collects a solution to undergo reaction from a first liquid storage bottle according to an embodiment of the present disclosure.

### Reference Numerals:

1-inert gas conveying module, 11-inert gas storage container, 12-pressure regulating filter, 13-first solenoid valve unit, 131-first two-way solenoid valve, 132-second two-way solenoid valve, 133-three-way solenoid valve, 2-sampling channel switching module, 21-first multi-channel switching valve, 22-second multi-channel switching valve, 3-quantification module, 31-syringe pump unit, 311-first syringe pump, 312-second syringe pump, 32-pressure sensor, 33-flowmeter, 34-second solenoid valve unit, 4-disposal module, 41-novel reactor, 411-bottle mouth, 412-sample injection port, 413-exhaust port, 414-sampling port, 415-bottle body, 4151-reaction inner container, 4152-temperature circulating layer, 4153-vacuum layer, 42-solution pipe, 43-waste liquid bottle, 5-liquid storage module, 51-liquid storage bottle, 511-bottle cap, and 512-bottle bottom.

### DETAILED DESCRIPTION OF THE EMBODIMENTS

The technical solutions of the embodiments of the present disclosure are clearly and completely described below with reference to the accompanying drawings. Apparently, the described embodiments are merely a part rather than all of the embodiments of the present disclosure. All other embodiments obtained by those of ordinary skill in the art based on the embodiments of the present disclosure without creative efforts shall fall within the protection scope of the present disclosure.

An objective of the present disclosure is to provide an automatic sample injection system, so as to ensure stability and accuracy of automatic sample injection in an experimental process.

To make the above objective, features, and advantages of the present disclosure clearer and more comprehensible, the present disclosure will be further described in detail below with reference to the accompanying drawings and the specific embodiments.

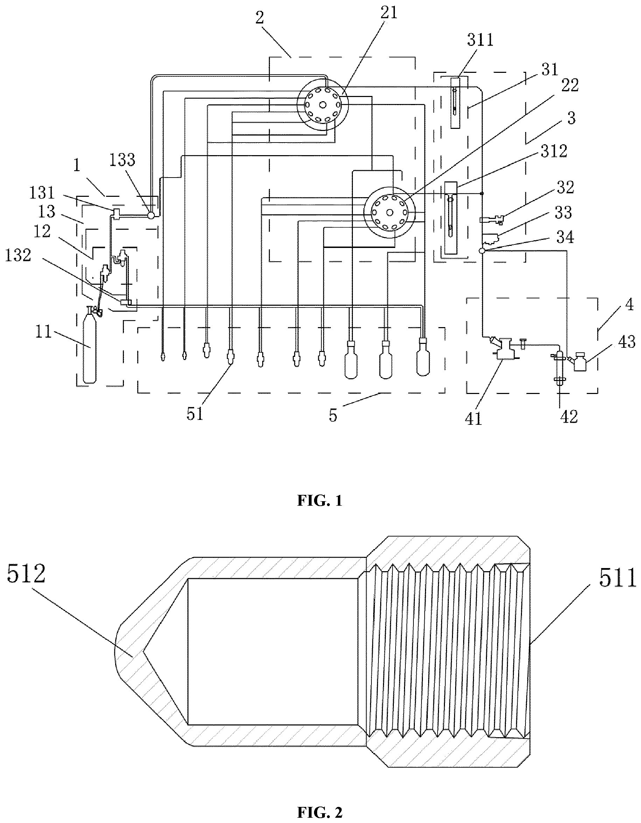

As shown in FIG. 1, an automatic sample injection system provided by the present disclosure includes: an inert gas conveying module 1, a sampling channel switching module 2, a quantification module 3, a disposal module 4, a liquid storage module 5, and a host computer (not shown in the figure).

The liquid storage module 5 and the sampling channel switching module 2 are both connected to the inert gas conveying module 1 through pipes. The quantification module 3 is connected to the sampling channel switching module 2 and the disposal module 4 separately through pipes. The liquid storage module 5 is connected to the sampling channel switching module 2 through a pipe.

The inert gas conveying module 1, the sampling channel switching module 2 and the quantification module 3 are all electrically connected to the host computer.

The inert gas conveying module 1 is configured to convey inert gas stored in the inert gas conveying module to the liquid storage module 5 and the sampling channel switching module 2 separately through pipes. The sampling channel switching module 2 is configured to extract a solution to undergo reaction stored in the liquid storage module 5 and to switch channels for extracting the solution to undergo reaction. The quantification module 3 is configured to determine the amount of the solution to undergo reaction injected into the disposal module 4.

The host computer is configured to control the inert gas conveying module 1 and the quantification module 3 to be switched on or switched off and to control the sampling channel switching module 2 to switch channels.

The host computer may control a programmable logic controller (PLC) to programmatically control other external devices through a communication protocol, so as to satisfy normal running of an automated program.

The inert gas conveying module 1 includes: an inert gas storage container 11, a pressure regulating filter 12, and a first solenoid valve unit 13.

The inert gas storage container 11 is connected to the liquid storage module 5 and the sampling channel switching module 2 separately through pipes. The pressure regulating filter 12 and the first solenoid valve unit 13 are arranged on a connecting pipe between the inert gas storage container 11 and the liquid storage module 5, or on a connecting pipe between the inert gas storage container 11 and the sampling channel switching module 2.

The first solenoid valve unit includes: a first two-way solenoid valve 131, a second two-way solenoid valve 132, and a three-way solenoid valve 133.

The first two-way solenoid valve 131 and the three-way solenoid valve 133 are arranged on the connecting pipe between the inert gas storage container 11 and the sampling channel switching module 2. The second two-way solenoid valve 132 is arranged on the connecting pipe between the inert gas storage container 11 and the liquid storage module 5.

Preferably, the number of pressure regulating filters 12 is two, and the two pressure regulating filters are arranged on the connecting pipe between the inert gas storage container 11 and the sampling channel switching module 2 and the connecting pipe between the inert gas storage container 11 and the liquid storage module 5, respectively.

The liquid storage module 5 includes N liquid storage bottles 51.

Each liquid storage bottle 51 is connected to the inert gas conveying module 1 through a pipe. A bottle bottom 512 of the liquid storage bottle 51 is conical or arc-shaped.

Each liquid storage bottle 51 includes: a first passage opening, a second passage opening, a third passage opening, and a bottle cap 511.

The first passage opening is configured to be connected to the sampling channel switching module 2 through a pipe. The second passage opening is configured to be connected to the inert gas conveying module 1 through a pipe. The third passage opening is configured to discharge gas or liquid from the liquid storage bottle 51.

The bottle cap 511 is connected to a bottle mouth 411 of the liquid storage bottle 51 in a threaded manner, as shown in FIG. 2.

Slight positive pressure of inert gas fills each liquid storage bottle 51, so as to avoid influence on accuracy of sample injection caused by negative pressure generated by a closed liquid storage bottle 51 due to decrease of liquid.

There are preferably four types of liquid storage bottles 51 provided by the present disclosure: a 10 mL sharp-bottomed liquid storage bottle, a 20 mL sharp-bottomed liquid storage bottle, a 500 mL round-bottomed liquid storage bottle, and a 125 mL two-necked liquid storage bottle. 10 mL and 20 mL sharp-bottomed liquid storage bottles are mainly configured to store block samples and reagent catalysts. A sharp bottom is designed to introduce a pipe to the bottle bottom 512 so as to avoid loss and waste of storage liquid. An internal thread is designed to facilitate matching with a customized polytetrafluoroethylene bottle cap 511. The 500 mL round-bottom liquid storage bottle is mainly configured to store an ultra-dry organic solvent, and the 125 mL two-necked bottle is mainly configured to store an organic solvent for diluting reaction liquid or even waste liquid. A sample injection port 412 at a side is mainly configured for insertion and pulling of a sampling needle during on-line monitoring. All the liquid storage bottles 51 are made of transparent sealed glass, which has pressure resistance. Not using brown or black is mainly to facilitate observation of the remaining amount of the storage liquid by an instrument user.

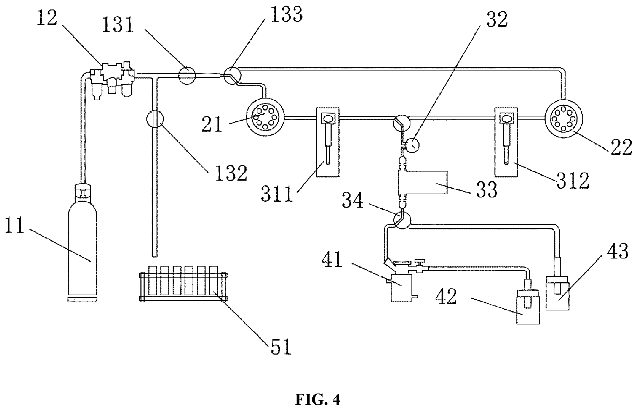

As may be seen from a schematic diagram of an overall structure of automatic sample injection shown in FIG. 4, in a research and development process of a synthesizer, in addition to the core reactor, a light source and close cooperation between automatic sample injection and host computer software, customized accessories that play an auxiliary and basic role are also designed, and mainly include various liquid storage bottles 51 and corresponding bottle caps 511.

A design of a customized bottle cap 511 matching a customized liquid storage bottle 51 undergoes repeated exploration, verification and modification. The bottle cap 511 mentioned above has three channels for gas introduction, liquid introduction, and gas discharge, respectively. In order to ensure concentration stability of the storage liquid and accuracy of automatic sample injection, the bottle cap 511 has to be tightly sealed, convenient to open or close, corrosion-resistant, and durable. A length of a polytetrafluoroethylene bottle cap 511 is increased, an on-off switch is embedded in the bottle cap 511, and a bottom of the bottle cap 511 is thinned and connected to an inverted cone, such that compaction seal is ensured without a sealing ring and connection is tight. A triangular inverted cone connection above the bottle cap 511 ensures tightness of a connecting pipe, and an initial customized bottle cap 511 is obtained. After repeated tests, it is found that liquid leakage occurs at the on-off switch embedded in the initial bottle cap 511, so an ordinary elastic sealing washer is additionally arranged at the on-off switch. The washer is located outside the bottle cap 511 and requires no corrosion resistance. In this way, a polytetrafluoroethylene three-channel compact bottle cap 511 as shown in FIG. 2 is obtained.

The sampling channel switching module 2 includes: a first multi-channel switching valve 21 and a second multi-channel switching valve 22.

The first multi-channel switching valve 21 is connected to M liquid storage bottles 51 through pipes. The second multi-channel switching valve 22 is connected to N-M liquid storage bottles 51 through pipes.

Two ten-channel switching valves may be connected to liquid storage bottles 51 with different specifications in a parallel or crossed manner. For convenience of use, a 10th channel of two switching valves is always connected to inert gas, a 9th channel is connected to a common ultra-dry solvent (for example, dichloromethane), and a 8th channel is connected to a secondary ultra-dry solvent (for example, acetonitrile or toluene). Other channels may be connected to the same or different storage liquids in an independent or crossed manner, thereby avoiding cross contamination. Connection modes of all liquid storage bottles 51 in FIGs. 1 and 4 are merely illustrative, and not all connecting pipes of the liquid storage bottles 51 are drawn. Those skilled in the art may obtain a specific pipe connection structural diagram according to the technical field provided by the present disclosure and common knowledge in the field.

Generally, according to experimental requirements, bottles with a sample injection amount less than or approximate to 1 mL are connected to the first multi-channel switching valve 21, and bottles with a sample injection amount greater than or approximate to 1 mL are connected to the second multi-channel switching valve 22. All channels of the multi-channel switching valves also need to be in one-to-one correspondence to substances in all the liquid storage bottles 51. The inert gas storage container 11 is depressurized and filtered by a pressure reducing valve and the pressure regulating filter 12 in sequence, so as to provide positive pressure and clean a pipe.

The quantification module 3 includes: a syringe pump unit 31, a pressure sensor 32, a flowmeter 33, and a second solenoid valve unit 34.

An inlet of the syringe pump unit 31 is connected to the sampling channel switching module 2 through a pipe. An outlet of the syringe pump unit 31 is connected to the flowmeter 33 through a pipe. The flowmeter 33 is connected to the disposal module 4 through a pipe. The second solenoid valve unit 34 is arranged on a connecting pipe between the flowmeter 33 and the disposal module 4. The pressure sensor 32 is arranged on a connecting pipe between the syringe pump unit 31 and the flowmeter 33. The second solenoid valve unit 34, the pressure sensor 32 and the flowmeter 33 are all electrically connected to the host computer.

The syringe pump unit 31 includes: a first syringe pump 311 and a second syringe pump 312.

The first syringe pump 311 is connected to one channel of the first multi-channel switching valve 21 through a pipe. The second syringe pump 312 is connected to one channel of the second multi-channel switching valve 22 through a pipe. A range of the first syringe pump 311 is smaller than that of the second syringe pump 312.

In order to ensure accuracy of sample injection, when the whole sample injection system provided by the present disclosure has a sample injection amount smaller than or approximate to 1 mL, a sample is injected through a pipe connected to a small-range syringe pump (that is, the first syringe pump 311). When the system has a sample injection amount greater than or approximate to 1 mL, a sample is injected through a pipe connected to a large-range syringe pump (that is, the second syringe pump 312). The two pipes run in parallel and then merge into one and enter a reactor. An injector on a syringe pump may be replaced, with a minimum volume of 500 uL and a maximum volume of 25 mL, and the number of switching valves and the number of syringe pumps may be modularized to increase. Each pipe is powered by a syringe pump. A syringe pump of each pipe cooperates with a high-precision flowmeter 33 behind the syringe pump, and dual control ensures accuracy of sample injection. As for the syringe pump and the flowmeter 33, the amount metered by the flowmeter 33 is used as a final sample injection amount. The first reason for such setting is that accuracy (1%) of the syringe pump itself is smaller than accuracy (2‰) of the flowmeter 33 itself. The second reason is that the syringe pump cannot identify bubbles or whether there is storage liquid, an amount difference metered by the flowmeter 33 between gas and liquid is large, and a large metering change generated when gas passes may be fed back to the flowmeter 33 and the syringe pump for dual self-correction.

The disposal module 4 includes: a novel reactor 41, a solution pipe 42, and a waste liquid bottle 43.

A sample injection port 412 of the novel reactor 41 and a liquid inlet of the waste liquid bottle are both connected to the second solenoid valve unit 34 through pipes. The solution pipe 42 is connected to an exhaust port 413 of the novel reactor 41 through a pipe.

The second solenoid valve unit 34 is configured to close a connecting pipe between the flowmeter 33 and the novel reactor 41 and open a connecting pipe between the flowmeter 33 and the waste liquid bottle 43 when a solution in the novel reactor 41 reaches a given amount.

After a high-precision flowmeter 33 controls a required sample injection amount, an solenoid valve next to the flowmeter 33 may immediately switch a redundant solution to undergo reaction into the waste liquid bottle 43, so as to ensure an accurate amount of sample injection into the novel reactor 41. After each sample injection, an instruction about whether to clean a pipe may be written in the host computer as required, and waste liquid after pipe cleaning enters the waste liquid bottle 43. An oil bubbler that may prevent suck-back may be connected to the exhaust port of the novel reactor 41, such that air pressure in the novel reactor 41 may be ensured to be normal, and no foreign gas or water vapor may enter the reactor, so as to satisfy sealing requirements of the whole automatic sample injection system.

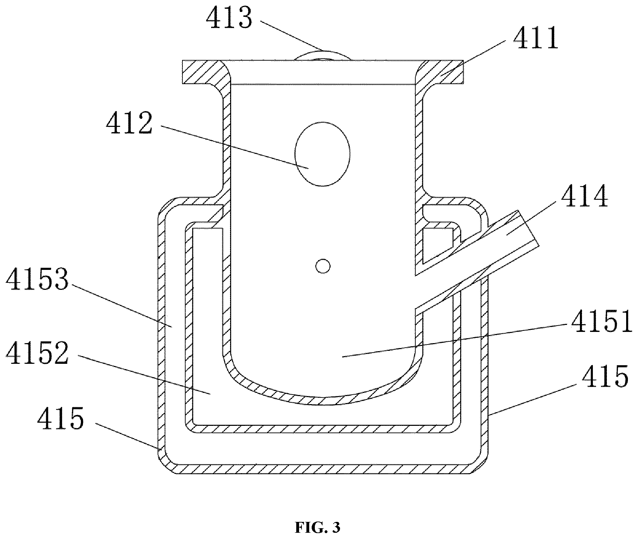

As shown in FIG. 3, the novel reactor 41 used by the present disclosure includes: a bottle mouth 411, a bottle body 415, and a sampling port 414.

A given angle is formed between the sample injection port 412 and the bottle body 415. The exhaust port 413 and the sample injection port 412 are symmetrically arranged with respect to a center line of the bottle mouth 411.

The bottle body 415 includes a reaction inner container 4151, a temperature circulating layer 4152 and a vacuum layer 4153 from inside to outside in sequence. A bottom of the reaction inner container 4151 is of an arc-shaped structure.

The exhaust port 413 and the sampling port 414 are both in communication with the reaction inner container 4151. The sampling port 414 is arranged at the bottom of the reaction inner container 4151.

Based on the above contents, the automatic sample injection system provided by the present disclosure mainly includes: the inert gas storage container 11, the pressure regulating filter 12, various solenoid valves, various customized liquid storage bottles 51, two ten-channel switching valves, two syringe pumps equipped with injectors with different ranges, the pressure sensor 32, the high-precision flowmeter 33, and the novel reactor 41. A connection relation of all components in the above modules is as shown in FIGs. 1 and 4.

Each embodiment of the present specification is described in a progressive manner, each embodiment focuses on the difference from other embodiments, and reference may be made to each other for the same and similar parts between the embodiments.

Specific examples are used herein to explain the principles and implementation mode of the present disclosure. The foregoing description of the embodiments is merely intended to help understand the method of the present disclosure and its core ideas. Besides, various modifications may be made by those of ordinary skill in the art to specific implementation mode and the scope of application in accordance with the ideas of the present disclosure. In conclusion, the content of this specification shall not be construed as a limitation to the present disclosure.

## Claims

1. An automatic sample injection system, comprising: an inert gas conveying module, a sampling channel switching module, a quantification module, a disposal module, a liquid storage module, and a host computer, wherein
the liquid storage module and the sampling channel switching module are both connected to the inert gas conveying module through pipes; the quantification module is connected to the sampling channel switching module and the disposal module separately through pipes; the liquid storage module is connected to the sampling channel switching module through a pipe;
the inert gas conveying module, the sampling channel switching module and the quantification module are all electrically connected to the host computer;
the inert gas conveying module is configured to convey inert gas stored in the inert gas conveying module to the liquid storage module and the sampling channel switching module separately through pipes; the sampling channel switching module is configured to extract a solution to undergo reaction stored in the liquid storage module and to switch channels for extracting the solution to undergo reaction; the quantification module is configured to determine an amount of the solution to undergo reaction injected into the disposal module; and
the host computer is configured to control the inert gas conveying module and the quantification module to be switched on or switched off and to control the sampling channel switching module to switch channels.

2. The automatic sample injection system according to claim 1, wherein the inert gas conveying module comprises: an inert gas storage container, a pressure regulating filter, and a first solenoid valve unit;
the inert gas storage container is connected to the liquid storage module and the sampling channel switching module separately through pipes; and the pressure regulating filter and the first solenoid valve unit are arranged on a connecting pipe between the inert gas storage container and the liquid storage module, or on a connecting pipe between the inert gas storage container and the sampling channel switching module.

3. The automatic sample injection system according to claim 1, wherein the liquid storage module comprises N liquid storage bottles;
each of the liquid storage bottles is connected to the inert gas conveying module through a pipe; and a bottle bottom of said each of the liquid storage bottles is conical or arc-shaped.

4. The automatic sample injection system according to claim 3, wherein each of the liquid storage bottles comprises: a first passage opening, a second passage opening, a third passage opening, and a bottle cap;
the first passage opening is configured to be connected to the sampling channel switching module through a pipe; the second passage opening is configured to be connected to the inert gas conveying module through a pipe; the third passage opening is configured to discharge gas or liquid from each of the liquid storage bottles; and
the bottle cap is connected to a bottle mouth of each of the liquid storage bottles in a threaded manner.

5. The automatic sample injection system according to claim 3, wherein the sampling channel switching module comprises: a first multi-channel switching valve and a second multi-channel switching valve; and
the first multi-channel switching valve is connected to M liquid storage bottles through pipes; and the second multi-channel switching valve is connected to N-M liquid storage bottles through pipes, wherein M is a number of liquid storage bottles connected to the first multi-channel switching valve; N is a total number of liquid storage bottles; and N-M is a difference between N liquid storage bottles and the M liquid storage bottles.

6. The automatic sample injection system according to claim 5, wherein the quantification module comprises: a syringe pump unit, a pressure sensor, a flowmeter, and a second solenoid valve unit; and
an inlet of the syringe pump unit is connected to the sampling channel switching module through a pipe; an outlet of the syringe pump unit is connected to the flowmeter through a pipe; the flowmeter is connected to the disposal module through a pipe; the second solenoid valve unit is arranged on a connecting pipe between the flowmeter and the disposal module; the pressure sensor is arranged on a connecting pipe between the syringe pump unit and the flowmeter; and the second solenoid valve unit, the pressure sensor and the flowmeter are all electrically connected to the host computer.

7. The automatic sample injection system according to claim 6, wherein the disposal module comprises: a novel reactor, a solution pipe, and a waste liquid bottle;
a sample injection port of the novel reactor and a liquid inlet of the waste liquid bottle are both connected to the second solenoid valve unit through pipes; the solution pipe is connected to an exhaust port of the novel reactor through a pipe; and
the second solenoid valve unit is configured to close a connecting pipe between the flowmeter and the novel reactor and open a connecting pipe between the flowmeter and the waste liquid bottle when a solution in the novel reactor reaches a given amount.

8. The automatic sample injection system according to claim 7, wherein the novel reactor comprises: a bottle mouth, a bottle body, and a sampling port;
a given angle is formed between the sample injection port and the bottle body; the exhaust port and the sample injection port are symmetrically arranged with respect to a center line of the bottle mouth;
the bottle body comprises a reaction inner container, a temperature circulating layer and a vacuum layer from inside to outside in sequence; a bottom of the reaction inner container has an arc-shaped structure; and
the sampling port is in communication with the reaction inner container.

9. The automatic sample injection system according to claim 6, wherein the syringe pump unit comprises: a first syringe pump and a second syringe pump;
the first syringe pump is connected to one channel of the first multi-channel switching valve through a pipe; the second syringe pump is connected to one channel of the second multi-channel switching valve through a pipe; and a range of the first syringe pump is smaller than that of the second syringe pump.
